# Europäisches Patentamt
## European Patent Office
## Office européen des brevets

(19)

(11) Veröffentlichungsnummer: **0 038 517 B1**

(12)

# EUROPÄISCHE PATENTSCHRIFT

(45) Veröffentlichungstag der Patentschrift: 24.07.85

(51) Int. Cl.⁴: **C 01 G 21/02**

(21) Anmeldenummer: **81102860.4**

(22) Anmeldetag: **14.04.81**

(54) Verfahren und Vorrichtung zur Erzeugung von partiell oxidiertem Bleistaub.

(30) Priorität: **18.04.80 DE 3015022**

(43) Veröffentlichungstag der Anmeldung:
**28.10.81 Patentblatt 81/43**

(45) Bekanntmachung des Hinweises auf die Patenterteilung:
**24.07.85 Patentblatt 85/30**

(84) Benannte Vertragsstaaten:
**AT BE DE FR GB IT NL**

(56) Entgegenhaltungen:
**CH - A - 189 641**
**FR - A - 557 999**
**FR - A - 580 755**
**FR - A - 622 223**
**FR - A - 631 725**
**FR - A - 1 399 784**
**US - A - 1 584 149**
**US - A - 1 888 823**
**US - A - 1 961 296**
**US - A - 3 210 164**

(73) Patentinhaber: **Goslarer Farbenwerke Dr. Hans Heubach GmbH. & Co. KG, Heubachstrasse, D-3394 Langelsheim 1 (DE)**

(72) Erfinder: **Heubach, Rainer, Dipl.-Kfm., Nonnenweg 14, D-3380 Goslar (DE)**
Erfinder: **Marx, Reinhard, Dr. Dipl.-Ing., Am Butterberg 6, D-3388 Bad Harzburg (DE)**
Erfinder: **Hauke, Dieter, Am Mühlbergholz 14, D-3387 Vienenburg (DE)**

(74) Vertreter: **Patentanwälte Müller-Boré, Deufel, Schön, Hertel, Lewald, Otto, Postfach 26 02 47 Isartorplatz 6, D-8000 München 26 (DE)**

## Beschreibung

Die Erfindung betrifft ein Verfahren und eine Vorrichtung zur Erzeugung von partiell oxidiertem Bleistaub, bei welchem eine Schüttung kleiner Bleistücke einer rotierenden Trommel zusammen mit Luft zugeführt wird.

In der aus der US-A-1 584 149 bekannten Mühle wird eine Schüttung kleiner Bleistücke in einer Trommel durch Rotieren derselben bewegt, wodurch ein sehr feinkörniger Abrieb entsteht, der aus der Mühle durch Luft entfernt wird. Diese Luft wird entweder über Düsen in die Mühle eingeblasen oder durch die Mühle durchgesaugt. Der hierbei erzeugte Bleistaub wird insbesondere in der Akkumulatorenindustrie verwendet. Jedoch erfordert diese Arbeitsweise einen sehr hohen Energieaufwand. Es ist bisher auch nicht gelungen, Anlagen zu bauen und zu beherrschen, die mehr als 250 bis 300 kg/h leisten. Es sind auch Mühlenverfahren bekannt, die nach dem Siebaustragsverfahren arbeiten. Hierbei ist eine sehr grosse Variation der Grösse der Produktionsapparate möglich – es sind Mühlen von 30 bis 1200 kg/h Bleidurchsatz bekanntgeworden, auch lässt sich zumindest bei den grossen Einheiten im Vergleich zu den Luftmühlen ein günstigerer Energieverbrauch erreichen, aber die Qualität des erzeugten Staubes ist bezüglich seiner Feinheit und seines Oxidationsgrades für die Akkumulatorenindustrie deutlich geringer.

Aus der US-A-1 584 149 ist die Überführung von Bleistücken in oxidierbares Bleipulver bekannt, wobei die Bleistücke zusammen mit Stahlkugeln unter Zuführung eines Luftstroms in einer Kugelmühle rotiert werden. Dieses bekannte Verfahren ist ungeeignet, den sich in den toten Zonen ansammelnden Abrieb in ausreichender Weise mit Luft zu kontaktieren und die einzige Störung der natürlichen Schüttung erfolgt durch Rotation der Reaktortrommel. Die dabei erzielte Produktionsrate ist unbefriedigend und beträgt nur 100 kg/h.

Durch die FR-A-631 725 ist eine rotierbare Trommel zur industriellen Herstellung von Bleioxiden, wie Mennige, bekannt geworden, wobei in den Öfen gleichzeitig flüssiges Blei sowie ein oxidierendes Gas zirkulieren. In Längsrichtung ist die Trommel dabei in Kammern mittels ringförmiger Trennwände aufgeteilt, die dazu dienen, die Führung des Materials vom Eintritt zum Austritt der Vorrichtung zu verzögern. Zusätzlich sind auf der Innenwand des Rohrkörpers und parallel zu seiner Achse longitudinale Elemente oder Schaufeln aus Blech angeordnet, die das Anheben des Materials auf eine ziemlich grosse Höhe begünstigen, so dass dieses als praktisch kontinuierliche Bahn herabfällt.

Mit den Massnahmen der bekannten Patentschriften lässt sich die der Erfindung zugrundeliegende Aufgabe nicht lösen, die darin besteht, ein Verfahren und eine Vorrichtung anzugeben, die die Vorteile der aus den oben genannten US Patentschriften bekannten Mühlenverfahren in sich vereinigen, d.h. einen partiell oxidierten Bleistaub erzeugen, der aufgrund seiner Feinheit und seines Oxidationsgrades eine bessere Qualität für die Batteriefabrikation besitzt und die bei möglichst hoher Durchsatzleistung mit einem günstigen Energieaufwand arbeiten.

Erfindungsgemäss wird diese Aufgabe dadurch gelöst, dass zur Erzielung hoher Durchsatzleistungen bei geringem Energieverbrauch mit die natürliche Schüttung mechanisch störenden, radial von der Trommelwand nach innen reichenden, unter Axialabstand zueinander angeordneten paarweise um 180° in Trommelumfangsrichtung gegeneinander versetzten Schikanen gearbeitet wird.

Eingehende Untersuchungen haben gezeigt, dass bei den bekannten Trommeln sich grobes und feines Material innerhalb der rotierenden Schüttung entmischte, wobei sich das feine in Abhängigkeit von Füllgrad und Drehzahl sowohl im Inneren als auch am Umfang der Schüttung konzentrieren konnte. Besonders wichtig ist es aber, dass die Luft zur Oxidation und als Trägergas an die Stelle in der Schüttung gelangen kann, wo der Abrieb konzentriert ist. Es hat sich nun gezeigt, dass dieses in ausreichender Weise nur bei den kleinen bisher bekannten Lufttrommeln der Fall war, und bei grösseren Trommeln, wenn sie nach dem gleichen Prinzip arbeiten, auch bei günstigster Einstellung aller Variablen unzureichend blieb, so dass das Verfahren ausser Gleichgewicht und Kontrolle geriet.

Durch die Erfindung ist es in vorteilhafter Weise möglich, den Lufttrommelprozess so zu steuern, dass fast beliebige Trommelgrössen bei den verschiedensten Einstellungen aller Variablen, wie Füllgrad, Drehzahl, Stückgrösse, Luftdurchsatz und Temperatur, sicher im stationären Gleichgewicht gefahren werden können. Dadurch, dass die natürliche Schüttung mechanisch gestört wird, wird dafür gesorgt, dass die Luft, wie immer sie auch gefahren wird, ausreichend an den Bleiabrieb herankommt.

Vorzugsweise wird mit Schikanen rautenförmigen Querschnitts gearbeitet.

Eine Vorrichtung zur Erzeugung von partiell oxidiertem Bleistaub aus Bleistücken mit einer rotierbaren Trommel, die an der Trommelinnenwand angeordnete Leitbleche aufweist, zur Aufnahme einer Schüttung kleiner Bleistücke zusammen mit Luft zeichnet sich aus durch die natürliche Schüttung mechanisch störende, radial von der Trommelwand nach innen reichende, unter Axialabstand zueinander angeordnete, paarweise um 180° in Trommelumfangsrichtung gegeneinander versetzte Schikanen rautenförmigen Querschnitts.

Diese mit der Trommelwand sich drehenden Schikanen stören die natürliche Schüttung innerhalb der Trommel bei Umdrehung jeweils derart, dass die Luft an den Bleiabrieb herangelangen kann. Durch die Massnahme nach der Erfindung werden Unwuchten an der Trommel vermieden. Es können gegeneinander versetzte Schikanenpaare in der gewünschten Anzahl zur Erzielung optimaler Ergebnisse angeordnet sein.

Besonders zweckmässig ist es, wenn vier solcher als Störkörper wirkende Schikanen unter Axialabstand zueinander paarweise versetzt von der Trommelwand nach innen reichen.

Eine beispielsweise Ausführungsform der Erfindung soll nun mit Bezug auf die beiliegenden Zeichnungen näher erläutert werden. Es zeigen

Figur 1 eine Querschnittsansicht einer Trommel,

Figur 2 eine Längsschnittansicht einer Trommel,

Figur 3 eine vergrösserte Ansicht eines Leitbleches oder einer Schikane und

Figur 4 eine Schnittansicht dieser Schikane.

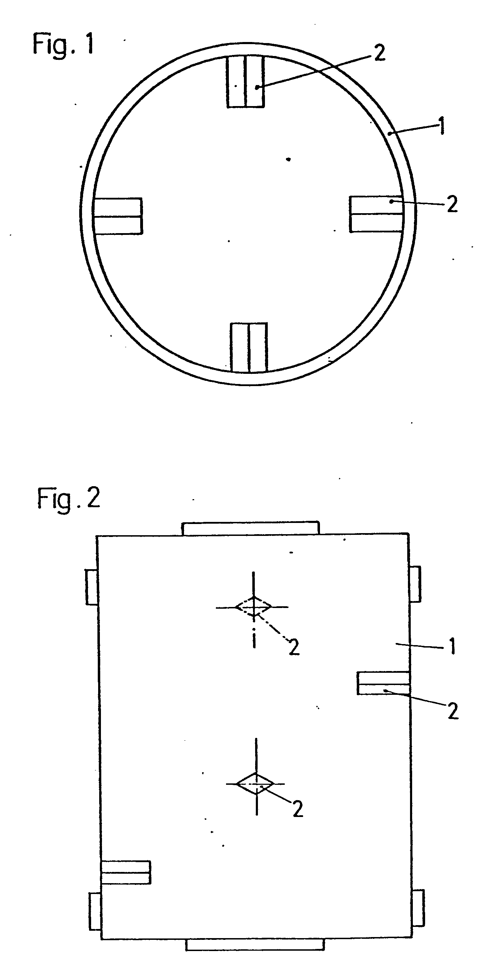

In Figur 1 ist eine Trommel 1 dargestellt, die beispielsweise auf vier Rollen gelagert ist und von einem nicht dargestellten Motor in Drehung versetzt wird. Im Inneren dieser Trommel sind Leitbleche oder Schikanen 2 angeordnet, die bei der Drehung der Trommel die natürliche Schüttung des in die Trommel eingegebenen Gutes, bestehend aus Bleistücken und Abrieb, immer wieder stören.

Wie der in Figur 2 dargestellte Längsschnitt zeigt, sind die Leitbleche 2 eines gegenüberliegenden Paares im axialen Abstand voneinander angeordnet. Beim dargestellten Ausführungsbeispiel sind vier Leitbleche 2 vorgesehen, und diese Leitbleche 2 erstrecken sich von der Trommelwand in ausreichender Weise in das Innere hinein, so dass auf jeden Fall die Schüttung gestört wird. Der Umfangsabstand eines Leitblechpaares 2 beträgt, wie in den Figuren 1 und 2 dargestellt, 180°, wobei jeweils die einzelnen Schikanen oder Leitbleche 2 eines Paares einen axialen Abstand voneinander haben.

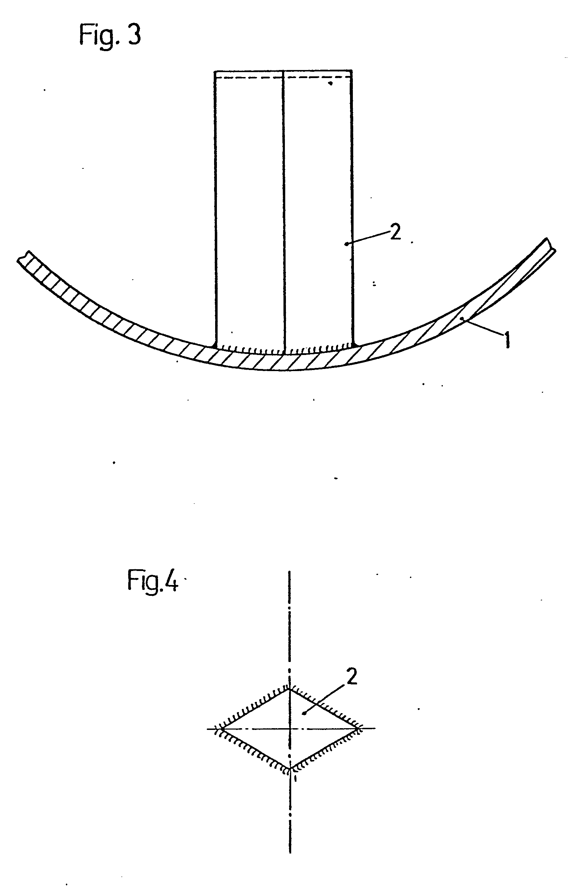

Wie Figur 3 zeigt, ist beispielsweise das Leitblech 2 an die Trommelinnenwand angeschweisst und hat, wie Figur 4 zeigt, einen rautenförmigen Querschnitt. Die Überlegenheit des erfindungsgemässen Verfahrens und der erfindungsgemässen Vorrichtung gegenüber dem bisher Bekannten soll durch die nachfolgend angegebene Produkt- und Leistungstabelle belegt werden.

| | Leistung kg/h | spez. Energieverbrauch kWh/t | Produktspez. Oberfläche m²/g | Qualität Säureabsorpt.-vermögen g H₂SO₄/kg |
|---|---|---|---|---|
| konventionelle Luftmühle | max. 300 | 300 | 2,5 | 250 |
| Siebaustragsmühle | max. 1200 | 155 | 1,8 | 220 |
| erfindungsgemässe Mühle | z.B. 1200 | 110 | 3,0 | 270 |

Zu den aus der Tabelle bereits ersichtlichen Vorteilen muss noch folgendes hinzugefügt werden:

1. Der Oxidationsgrad des Staubes kann innerhalb weiter Bereiche (50 bis 75%) beliebig eingestellt und mit enger Toleranz ($\pm 1\%$) eingehalten werden.

2. Es lassen sich Bleisorten höchster Reinheit (z.B. Feinblei gemäss DIN 1719) verarbeiten, während verschiedene andere Mühlen nicht darauf verzichten können, dass das Blei mit Oxidationsbeschleunigern dotiert ist.

3. Die höhere Feinheit des mit der erfindungsgemässen Mühle produzierten Staubes führt bei der Akkumulatorenfertigung dazu, dass in deutlicher Weise Material eingespart werden kann, d.h. bei vorgegebener Batteriekapazität kommt man mit weniger Material aus, oder man erreicht mit dem gleichen Material eine höhere Batteriekapazität.

**Patentansprüche**

1. Verfahren zur Erzeugung von partiell oxidiertem Bleistaub aus Bleistücken, bei dem eine Schüttung kleiner Bleistücke zusammen mit Luft einer rotierenden mit Leitblechen versehenen Trommel zugeführt wird, dadurch gekennzeichnet, dass zur Erzielung hoher Durchsatzleistungen bei geringem Energieverbrauch mit die natürliche Schüttung mechanisch störenden, radial von der Trommelwand nach innen reichenden, unter Axialabstand zueinander angeordneten paarweise um 180° in Trommelumfangsrichtung gegeneinander versetzten Schikanen gearbeitet wird.

2. Verfahren nach Anspruch 1, dadurch gekennzeichnet, dass mit vier sich radial in die Trommel hinein erstreckenden Schikanen gearbeitet wird.

3. Verfahren nach einem der vorhergehenden Ansprüche, dadurch gekennzeichnet, dass Schikanen rautenförmigen Querschnitts verwendet werden.

4. Vorrichtung zur Erzeugung von partiell oxidiertem Bleistaub aus Bleistücken mit einer rotierbaren Trommel, die an der Trommelinnenwand angeordnete Leitbleche aufweist, zur Aufnahme einer Schüttung kleiner Bleistücke zusammen mit Luft, gekennzeichnet durch die natürliche Schüttung mechanisch störende, radial von der Trommelwand nach innen reichende, unter Axialabstand zueinander angeordnete, paarweise um 180° in Trommelumfangsrichtung gegeneinander versetzte Schikanen (2) rautenförmigen Querschnitts.

5. Vorrichtung nach Anspruch 4, dadurch gekennzeichnet, dass vier solcher als Störkörper wirkender Schikanen von der Trommelwand nach innen reichen.

6. Vorrichtung nach einem der Ansprüche 4 oder 5, dadurch gekennzeichnet, dass die sich radial in die Trommel hinein erstreckenden Schikanen rautenförmigen Querschnitts stabartig ausgebildet sind.

7. Verfahren nach einem der Ansprüche 1–3, dadurch gekennzeichnet, dass radial sich in die Trommel hinein erstreckende Schikanen stabartiger Ausbildung verwendet werden.

**Claims**

1. Process for the production of partially oxidized lead dust from lead pieces in which a bulk charge of small lead pieces together with air is supplied to a rotating drum provided with baffle plates, characterized in that to obtain high throughputs with low energy consumption the operation is carried out with baffles which mechanically disturb the natural bulk, extend radially inwardly from the drum wall, and are arranged axially spaced in pairs offset with respect to each other by 180° in the drum peripheral direction.

2. Process according to claim 1, characterized in that four baffles extending radially into the drum are used.

3. Process according to any one of the preceding claims, characterized in that baffles of rhomboidal cross-section are used.

4. Apparatus for the production of partially oxidized lead dust from lead pieces comprising a rotatable drum comprising baffle plates disposed at the drum inner wall for receiving a bulk charge of small lead pieces together with air, characterized by baffles (2) of rhomboidal cross-section which mechanically disturb the natural bulk, extend radially inwardly from the drum wall, are arranged axially spaced in pairs offset with respect to each other by 180° in the drum peripheral direction.

5. Apparatus according to claim 4, characterized in that four such baffles acting as interfering bodies extend inwardly from the drum wall.

6. Apparatus according to any one of claims 4 or 5, characterized in that the baffles extending radially into the drum and of rhomboidal cross-section are made in the form of rods.

7. Process according to any one of claims 1 to 3, characterized in that baffles extending radially into the drum and of rod-like configuration are used.

**Revendications**

1. Procédé de production de poussière de plomb partiellement oxydée à partir de fragments de plomb où une masse de petits fragments de plomb est introduite avec un flux d'air dans un tambour rotatif muni de tôles directrices, caractérisé en ce que pour obtenir des débits élevés avec une faible consommation d'énergie on fait appel à des chicanes disposées par paires avec un décalage de 180° dans le sens périphérique du tambour, s'étendant radialement de la paroi du tambour vers l'intérieur en respectant un certain intervalle axial, pour brasser mécaniquement la masse naturelle.

2. Procédé selon revendication 1, caractérisé en ce que l'on fait appel à quatre chicanes disposées radialement vers l'intérieur du tambour.

3. Procédé selon l'une des précédentes revendications, caractérisé en ce que l'on fait appel à des chicanes dont la section est en losange.

4. Dispositif de fabrication de poussière de plomb partiellement oxydée à partir de fragments de plomb à l'aide d'un tambour rotatif (1), comportant des tôles directrices sur sa paroi interne, destiné à recevoir une masse de petits fragments de plomb avec un flux d'air, caractérisé par des chicanes (2) tournées radialement vers l'intérieur à partir de la paroi du tambour, disposées mutuellement dans un certain intervalle axial, décalées par paires à 180° dans le sens périphérique du tambour, à section en losange et servant à brasser mécaniquement la masse naturelle.

5. Dispositif selon revendication 4, caractérisé en ce que quatre de ces chicanes, agissant comme des organes de brassage, sont disposées de la paroi du tambour vers l'intérieur.

6. Dispositif selon l'une des revendications 4 ou 5, caractérisé en ce que les chicanes (2) à section en losange s'étendant radialement vers l'intérieur du tambour sont en forme de barres.

7. Procédé selon l'une des revendications 1 à 3, caractérisé en ce que l'on utilise des chicanes (2) en forme de barres, disposées radialement vers l'intérieur du tambour.

Fig. 1

Fig. 2

Fig. 3

2

1

Fig.4

2